# EUROPÄISCHE PATENTSCHRIFT

(11) **EP 3 122 692 B1**
(45) Veröffentlichungstag und Bekanntmachung des Hinweises auf die Patenterteilung: **25.07.2018**
(21) Anmeldenummer: 15708729.7
(22) Anmeldetag: 26.02.2015
(51) Int. Cl.: C03C 4/02, C03C 1/00, C03C 1/10, C03B 25/00, C03B 29/00, C03B 32/00

(54) **VERFAHREN ZUR HERSTELLUNG VON ROTEN GLASBEHÄLTNISSEN**
METHOD FOR PRODUCING RED GLASS VESSELS
PROCÉDÉ DE FABRICATION DE RÉCIPIENTS EN VERRE ROUGES

(30) Priorität: 26.03.2014 DE 102014004332
(43) Veröffentlichungstag der Anmeldung: 01.02.2017
(73) Patentinhaber: Saint-Gobain Oberland AG, 88410 Bad Wurzach (DE)
(72) Erfinder: ZIMMERMANN, Harald, 88410 Bad Wurzach (DE); AL HAMDAN, Khaled, 09599 Freiberg (DE)
(74) Vertreter: Lelgemann, Karl-Heinz
(86) Internationale Anmeldenummer: PCT/EP2015/000456
(87) Internationale Veröffentlichungsnummer: WO 2015/144283

(56) Entgegenhaltungen:
- WO-A1-2014/070362
- DE-A1- 10 053 450
- DE-A1-102004 001 729
- US-A1- 2010 101 275

## Beschreibung

Die Erfindung bezieht sich auf ein Verfahren zur Herstellung von roten Glasbehältnissen.

Aus dem Stand der Technik sind unterschiedliche entsprechende Verfahren zur Herstellung roter Glasbehältnisse bekannt. Diese bekannten Verfahren sind jedoch entweder hinsichtlich ihrer Anforderungen an das Ausgangsmaterial oder an die Regelung der Parameter beim Herstellungsprozess aufwendig.

Aus der DE 10 2004 001 729 A1 ist ein derartiges Verfahren zur Herstellung roter Kupferrubingläser bzw. rot gefärbten Borosilicatglases bekannt.

Die Dokumente US 2010/0101275 A1, WO 2014/070362 A1 und DE 100 53 450 A1 beschreiben Verfahren zur Herstellung von roten Glasbehältnissen.

Der Erfindung liegt die Aufgabe zugrunde, ein Verfahren zur Herstellung von roten Glasbehältnissen zur Verfügung zu stellen, bei dem einerseits Ausgangsmaterialien bzw. Rohstoffe eingesetzt werden können, die mit einem vergleichsweise geringen wirtschaftlichen Aufwand beschaffbar und die des Weiteren lebensmittelfreundlich sind, wobei darüber hinaus die Steuerung und Regelung der bei dem Herstellungsverfahren einzuhaltenden Parameter mit einem geringen Aufwand einher gehen soll.

Diese Aufgabe wird erfindungsgemäß durch ein Verfahren zur Herstellung von roten Glasbehältnissen gelöst, bei dem eine farblose geschmolzene Glasmasse mit einem Massengehalt an Zinnoxid von 0,2 bis 3 % und an Kupferoxid von 0,06 bis 3 % hergestellt wird, bei dem die hergestellte farblose geschmolzene Glasmasse mit Natrium- und/oder Calciumsulfat und mit einem kohlenstoffhaltigen Reduktionsmittel mit einem molaren Kohlenstoff/Sulfat-Verhältnis von 0,5 bis 5 neutral geläutert wird, bei dem aus der neutral geläuterten Glasmasse Glasbehältnisse geformt werden, und bei dem die Glasbehältnisse auf eine Temperatur unterhalb von 520 Grad C bis 580 Grad C abgekühlt werden. Mit dem erfindungsgemäßen Verfahren wird erreicht, dass die Anforderungen an das Ausgangsmaterial bzw. die Rohstoffe im Vergleich zum Stand der Technik erheblich reduziert werden. So sind beispielsweise keinerlei Anforderungen hinsichtlich des Sulfidgehalts des Ausgangsmaterials zu beachten bzw. einzuhalten. Diejenigen Verfahrensparameter, die für das Gelingen des erfindungsgemäßen Herstellungsprozesses unbedingt einzuhalten sind, lassen sich mit einem vergleichsweise geringen steuerungs- und regelungstechnischen Aufwand in den zulässigen Wertebereichen halten.

Vorteilhaft kann als kohlenstoffhaltiges Reduktionsmittel bei dem erfindungsgemäßen Verfahren Aktivkohle eingesetzt werden, wobei durch den Einsatz von Aktivkohle das molare Kohlenstoff/Sulfat-Verhältnis mit einem äußerst geringen Aufwand in dem erforderlichen Verhältnis einstell- bzw. haltbar ist.

Als vorteilhaft hat sich erwiesen, wenn der Massengehalt an Zinnoxid 0,5 bis 1,5 %, vorzugsweise ca. 1 %, und an Kupferoxid 0,1 bis 0,35 %, vorzugsweise ca. 0,2 %, beträgt, wobei der wirtschaftliche Aufwand weiter erheblich reduziert werden kann.

Hinsichtlich des einzuhaltenden molaren Kohlenstoff/Sulfat-Verhältnisses hat sich als besonders vorteilhaft herausgestellt, wenn die hergestellte farblose geschmolzene Glasmasse mit Natrium- und/oder Calciumsulfat und mit Aktivkohle mit einem molaren Kohlenstoff/Sulfat-Verhältnis von 0,5 bis 2, vorzugsweise von ca. 1,0, neutral geläutert wird.

Der Einsatz von Zinnoxid und Kupferoxid in der farblosen geschmolzenen Glasmasse kann reduziert werden, wenn die unterhalb der Temperatur von 520 Grad C bis 580 Grad C abgekühlten Glasbehältnisse einer sekundären thermischen Behandlung, vorzugsweise bei ca. 620 Grad C, unterzogen werden.

Wenn die farblose geschmolzene Glasmasse mit Phosphaten, vorzugsweise Calcium-Phosphaten und insbesondere mit Di- und/oder Tri-Calcium-Phosphat hergestellt wird, kann das Glasnetzwerk vorteilhaft modifiziert werden, um den Temper- bzw. Anlaufprozess zu beschleunigen bzw. die für die Durchführung des Verfahrens erforderlichen Anlauftemperaturen so niedrig wie möglich zu halten. Hierbei haben sich CalciumPhosphate, insbesondere Di- und/oder Tri-Calcium-Phosphat, als besonders vorteilhaft erwiesen, da sie PH-neutral und absolut ungiftig sind. Sowohl Di- als auch Tri-Calcium-Phosphat kommen mit einem geringen Fluorgehalt vor und sind in dieser Form, da hohe Fluorgehalte beim erfindungsgemäßen Verfahren mit Nachteilen einhergehen, für das erfindungsgemäße Verfahren vorteilhaft einsetzbar. Di-Calcium-Phosphat, bekannt auch als Claciumhydrogenphosphat, wird üblicherweise bergmännisch abgebaut und entsteht darüber hinaus als Abfallstoff in der Lebensmittelindustrie. Tri-Calcium-Phosphat, bekannt auch als Spodium oder Knochenasche, ist ebenfalls bergmännisch abbaubar und darüber hinaus als Abfall- oder Reststoff erhältlich und - ähnlich wie Di-Calcium-Phosphat - beim erfindungsgemäßen Verfahren als Rohstoff einsetz- und verwertbar.

Des Weiteren ist es möglich, die farblose geschmolzene Glasmasse mit Borsäure herzustellen, wobei auch diese der Modifikation des Glasnetzwerkes zur Beschleunigung des Temper- bzw. Anlaufprozesses bzw. zur möglichst niedrigen Gestaltung der Anlauftemperaturen dient.

Sowohl hinsichtlich der Phosphate als auch hinsichtlich der Borsäuren hat sich ein Massengehalt von jeweils ca. 0,01 bis 5 % als besonders vorteilhaft herausgestellt.

Zur beschleunigten Keimbildung ist es zweckmäßig, wenn die farblose geschmolzene Glasmasse mit Metall- bzw. Schwermetallverbindungen wie PbO und/oder PbS und/oder Bi₂O₃ und/oder Bi₂S₃ hergestellt wird, wobei sich Bi₂O₃ als von allen Schwermetallen als am wenigsten bedenklich und damit besonders vorteilhaft erwiesen hat.

Hinsichtlich des Massengehalts der farblosen geschmolzenen Glasmasse an den vorstehend erwähnten Stoffen hat sich erwiesen, dass ein Massengehalt an PbO und /oder PbS und/oder Bi₂O₃ und/oder Bi₂S₃ von jeweils 0,01 bis 3 % besonders vorteilhaft ist.

Entsprechend hergestellte rote Glasbehältnisse sind vorteilhaft insbesondere tauglich als Behältnisse für Lebensmittel und/oder Getränke.

Bei der im Falle der Erfindung vorgenommenen neutralen Läuterung wird die Glasschmelze so eingestellt, dass sie weder oxidierend noch reduzierend ist.

Im Folgenden wird die Erfindung anhand einer Ausführungsform näher erläutert.

Zunächst wird aus geeigneten Rohstoffen eine farblose geschmolzene Glasmasse hergestellt, die als Ausgangsmaterial für das erfindungsgemäße Verfahren dient. In der Glasmasse sind Zinnoxid und Kupferoxid enthalten, wobei der Massengehalt an Zinnoxid ca. 1 % und der Massengehalt an Kupferoxid ca. 0,2 % beträgt.

Des Weiteren ist in der Glasmasse Di- und/oder Tri-Calcium-Phosphat enthalten, wobei der Massengehalt an Di- und/oder Tri-Calcium-Phosphat ca. 0,01 bis 5 % beträgt.

Alternativ oder zusätzlich zu dem Tri-Calcium-Phosphat kann die farblose geschmolzene Glasmasse Borsäure enthalten, wobei auch hinsichtlich des Massengehalts an Borsäure sich ein Bereich von 0,01 bis 5 % als besonders vorteilhaft herausgestellt hat.

Das Phosphat bzw. die Borsäure dient der Modifikation des Glasnetzwerkes, so dass der Temper- bzw./Anlaufprozess beschleunigt und die notwenigen Anlauftemperaturen so gering wie möglich gehalten werden können.

Um die Keimbildung zu beschleunigen, wird die farblose geschmolzene Glasmasse mit Bi₂O₃ hergestellt, und zwar mit einem Massengehalt zwischen 0,01 bis 3 %.

Anstelle von Bi₂O₃ können zum gleichen Zweck auch PbO und/oder PbS und/oder Bi₂S₃ eingesetzt werden.

Wesentlich bei den vorstehend genannten Stoffen ist, dass es sich hierbei um Metall- bzw. Schwermetallverbindungen handelt, die bei den in der Glasschmelze gegebenen Redox-Bedingungen leicht metallisch ausfallen.

Die farblose geschmolzene Glasmasse wird mit Natrium- und/oder Calciumsulfat und mit Aktivkohle neutral geläutert. Hierbei wird ein molares Kohlenstoff/Sulfat-Verhältnis von ca. 1,0 eingehalten.

Aus der in entsprechender Weise neutral geläuterten Glasmasse werden mittels der aus dem Stand der Technik bekannten Verfahren Glasbehältnisse geformt.

Nach Beendigung der Formung der Glasbehältnisse werden diese auf eine Temperatur unterhalb von 520 Grad C bis 580 Grad C abgekühlt.

Im beschriebenen Ausführungsbeispiel des erfindungsgemäßen Verfahrens erfolgt nach dieser Abkühlung eine sekundäre thermische Behandlung, die bei ca. 620 Grad C durchgeführt wird. Danach erfolgt die Abkühlung der entsprechend hergestellten Glasbehältnisse. Die Glasbehältnisse weisen am Ende des vorstehend geschilderten Herstellungsverfahrens die gewünschte rote Einfärbung auf. Sie sind insbesondere auch zur Aufnahme von Lebensmitteln oder Getränken geeignet.

## Patentansprüche

1. Verfahren zur Herstellung von roten Glasbehältnissen, bei dem eine farblose geschmolzene Glasmasse, deren Massengehalt an Zinnoxid max. 3 % und an Kupferoxid max. 3 % beträgt, hergestellt wird, bei dem die hergestellte farblose geschmolzene Glasmasse mit Natrium- und/oder Calciumsulfat und mit einem kohlenstoffhaltigen Reduktionsmittel mit einem molaren Kohlenstoff/Sulfat-Verhältnis von 0,5 bis 5 neutral geläutert wird, bei dem aus der neutral geläuterten Glasmasse Glasbehältnisse geformt werden, und bei dem die Glasbehältnisse auf eine Temperatur unterhalb von 520 Grad C bis 580 Grad C abgekühlt werden.

2. Verfahren nach Anspruch 1, bei dem als kohlenstoffhaltiges Reduktionsmittel Aktivkohle eingesetzt wird.

3. Verfahren nach Anspruch 1 oder 2, bei dem die farblose geschmolzene Glasmasse mit einem Massengehalt an Zinnoxid von 0,2 bis 3 % und an Kupferoxid von 0,06 bis 3 % hergestellt wird.

4. Verfahren nach Anspruch 3, bei dem die farblose geschmolzene Glasmasse mit einem Massengehalt an Zinnoxid von 0,5 bis 1,5 %, vorzugsweise von ca. 1 %, und an Kupferoxid von 0,1 bis 0,35 %, vorzugsweise von ca. 0,2 %, hergestellt wird.

5. Verfahren nach einem der Ansprüche 1 bis 4, bei dem die hergestellte farblose geschmolzene Glasmasse mit Natrium- und/oder Calciumsulfat und mit Aktivkohle mit einem molaren Kohlenstoff/Sulfat-Verhältnis von 0,5 bis 2, vorzugsweise von ca. 1,0, neutral geläutert wird.

6. Verfahren nach einem der Ansprüche 1 bis 5, bei dem die unterhalb der Temperatur von 520 Grad C bis 580 Grad C abgekühlten Glasbehältnisse einer sekundären thermischen Behandlung, vorzugsweise bei ca. 620 Grad C, unterzogen werden.

7. Verfahren nach einem der Ansprüche 1 bis 6, bei dem die farblose geschmolzene Glasmasse mit Phosphaten, vorzugsweise Calcium-Phosphaten und insbesondere Di- und/oder Tri-Calcium-Phosphat hergestellt wird.

8. Verfahren nach Anspruch 7, bei dem die farblose geschmolzene Glasmasse mit einem Massengehalt an Phosphaten von 0,01 bis 5 % hergestellt wird.

9. Verfahren nach einem der Ansprüche 1 bis 8, bei dem die farblose geschmolzene Glasmasse mit Borsäure hergestellt wird.

10. Verfahren nach Anspruch 9, bei dem die farblose geschmolzene Glasmasse mit einem Massengehalt an Borsäure von 0,01 bis 5 % hergestellt wird.

11. Verfahren nach einem der Ansprüche 1 bis 10, bei dem die farblose geschmolzene Glasmasse mit Metall- bzw. Schwermetallverbindungen wie PbO und/oder PbS und/oder Bi₂O₃ und/oder Bi₂S₃ hergestellt wird.

12. Verfahren nach Anspruch 11, bei dem die farblose geschmolzene Glasmasse mit einem Massengehalt an PbO und/oder PbS und/oder Bi₂O₃ und/oder Bi₂S₃ von jeweils 0,01 bis 3 % hergestellt wird.

13. Verwendung von nach einem der Ansprüche 1 bis 6 hergestellten roten Glasbehältnissen als Behältnis für Lebensmittel und/oder Getränke.

## Claims

1. A method for producing red glass vessels, in which a colourless molten glass composition having a tin oxide content of at most 3 % by weight and a copper oxide content of at most 3 % by weight is produced, in which the colourless molten glass composition is refined under neutral conditions with sodium sulphate and/or calcium sulphate and with a carbon-containing reducing agent having a molar carbon/sulphate ratio of 0.5 to 5, in which glass vessels are moulded from the glass composition which has been refined under neutral conditions, and in which the glass vessels are cooled to a temperature of below 520 °C to 580 °C.

2. The method as claimed in claim 1, in which activated carbon is used as the carbon-containing reducing agent.

3. The method as claimed in claim 1 or claim 2, in which the colourless molten glass composition is produced with a tin oxide content of 0.2 % to 3 % by weight and with a copper oxide content of 0.06 % to 3 % by weight.

4. The method as claimed in claim 3, in which the colourless molten glass composition is produced with a tin oxide content of 0.5 % to 1.5 % by weight, preferably approximately 1 % by weight, and with a copper oxide content of 0.1 % to 0.35 % by weight, preferably approximately 0.2 %.

5. The method as claimed in one of claims 1 to 4, in which the colourless molten glass composition which has been produced is refined under neutral conditions with sodium sulphate and/or calcium sulphate and with activated carbon having a molar carbon/sulphate ratio of 0.5 to 2, preferably approximately 1.0 %.

6. The method as claimed in one of claims 1 to 5, in which the glass vessels which have been cooled to below a temperature of 520 °C to 580 °C undergo a secondary heat treatment, preferably at approximately 620 °C.

7. The method as claimed in one of claims 1 to 6, in which the colourless molten glass composition is produced with phosphates, preferably calcium phosphates and in particular dicalcium phosphate and/or tricalcium phosphate.

8. The method as claimed in claim 7, in which the colourless molten glass composition is produced with a phosphates content of 0.01 % to 5 % by weight.

9. The method as claimed in one of claims 1 to 8, in which the colourless molten glass composition is produced with boric acid.

10. The method as claimed in claim 9, in which the colourless molten glass composition is produced with a boric acid content of 0.01 % to 5 % by weight.

11. The method as claimed in one of claims 1 to 10, in which the colourless molten glass composition is produced with metal or heavy metal compounds such as PbO and/or PbS and/or Bi₂O₃ and/or Bi₂S₃.

12. The method as claimed in claim 11, in which the colourless molten glass composition is produced with a PbO or PbS and/or Bi₂O₃ and/ or Bi₂S₃ content of 0.01 % to 3 % by weight respectively.

13. Use of red glass vessels produced in accordance with one of claims 1 to 6, as a container for foodstuffs and/or beverages.

## Revendications

1. Procédé de fabrication de contenants en verre rouges, consistant à préparer une masse de verre fondu incolore ayant une teneur massique en oxyde d'étain inférieure ou égale à 3 % et en oxyde de cuivre inférieure ou égale à 3 %, à soumettre la masse de verre fondu incolore ainsi préparée à une purification neutre avec du sulfate de sodium et/ou de calcium et avec un agent de réduction contenant du carbone, le rapport molaire carbone / sulfate étant compris entre 0,5 et 5, à former des contenants en verre à partir de la masse de verre ayant subi une purification neutre, et à refroidir lesdits contenants en verre à une température comprise entre moins de 520 degrés C et 580 degrés C.

2. Procédé selon la revendication 1, dans lequel on met en oeuvre, en tant qu'agent de réduction contenant du carbone, du charbon actif.

3. Procédé selon la revendication 1 ou 2, dans lequel on prépare la masse de verre fondu incolore de manière à ce que sa teneur massique en oxyde d'étain soit comprise entre 0,2 et 3 % et celle en oxyde de cuivre soit comprise entre 0,06 et 3 %.

4. Procédé selon la revendication 3, dans lequel on prépare la masse de verre fondu incolore de manière à ce que sa teneur massique en oxyde d'étain soit comprise entre 0,5 et 1,5 %, préférentiellement d'environ 1 %, et celle en oxyde de cuivre soit comprise entre 0,1 et 0,35 %, préférentiellement d'environ 0,2 %.

5. Procédé selon l'une des revendications 1 à 4, dans lequel la masse de verre fondu incolore ainsi préparée est soumise à une purification neutre avec du sulfate de sodium et/ou de calcium et avec du charbon actif, le rapport molaire carbone / sulfate étant compris entre 0,5 et 2,0, préférentiellement d'environ 1,0.

6. Procédé selon l'une des revendications 1 à 5, dans lequel les contenants en verre ayant subi un refroidissement à ladite température comprise entre moins de 520 degrés C et 580 degrés C sont soumis à un traitement thermique secondaire réalisé de préférence à environ 620 degrés C.

7. Procédé selon l'une des revendications 1 à 6, dans lequel on prépare la masse de verre fondu incolore en mettant en oeuvre des phosphates, s'agissant préférentiellement de phosphates de calcium et notamment de phosphate di- et/ou tricalcique.

8. Procédé selon la revendication 7, dans lequel on prépare la masse de verre fondu incolore de manière à ce que sa teneur massique en phosphates soit comprise entre 0,01 et 5 %.

9. Procédé selon l'une des revendications 1 à 8, dans lequel on prépare la masse de verre fondu incolore en mettant en oeuvre de l'acide borique.

10. Procédé selon la revendication 9, dans lequel on prépare la masse de verre fondu incolore de manière à ce que sa teneur massique en acide borique soit comprise entre 0,01 et 5 %.

11. Procédé selon l'une des revendications 1 à 10, dans lequel on prépare la masse de verre fondu incolore en mettant en oeuvre des composés de métaux ou de métaux lourds tels que le PbO et/ou PbS et/ou le Bi₂O₃ et/ou le Bi₂S₃·

12. Procédé selon la revendication 11, dans lequel on prépare la masse de verre fondu incolore de manière à ce que sa teneur massique en PbO et/ou PbS et/ou Bi₂O₃ et/ou le Bi₂S₃ soit comprise entre 0,01 et 3 %.

13. Utilisation de contenants en verre rouges, fabriqués selon l'une des revendications 1 à 6, en tant que contenant pour aliments et/ou boissons.
